# EUROPEAN PATENT APPLICATION

(11) **EP 4 379 563 A1**
(43) Date of publication of application: **05.06.2024**
(21) Application number: 22383161.1
(22) Date of filing: 01.12.2022
(51) Int. Cl.: G06F 15/02

(54) **SCALABLE TESTING FOR SMART CARDS**

(71) Applicant: Giesecke+Devrient Mobile Security Germany GmbH, 81677 München (DE)
(72) Inventor: Gomez Jimenez, Ruben, E-08820 El Prat de Llobregat Barcelona (ES); Castillo Montoya, E-08820 El Prat de Llobregat Barcelona (ES); Marcos Benitez, Monica, E-08820 El Prat de Llobregat Barcelona (ES); Aznar Puyalto, Pablo, E-08820 El Prat de Llobregat Barcelona (ES)
(74) Representative: Giesecke+Devrient IP

(57) **Abstract**

Exemplary embodiments of a testing system and method for executing tests on a smartcard are provided. The testing system comprises a plurality of host computers, a plurality of reader devices connectable to a plurality of smartcards, a network connecting the plurality of host computers with the plurality of reader devices, and a message broker configured to provide for the plurality of host computers a collision-free access to the plurality of reader devices. Each of the plurality of host computers is configured to access at least one reader device through the network for executing tests on a smartcard connected with the accessed reader device.

## Description

The present invention relates generally to smart card testing, and more specifically to exemplary embodiments for implementing scalable testing for smart cards.

### BACKGROUND OF THE INVENTION

Smart cards have been used throughout the world in a variety of applications. A smart card is a card with an embedded integrated circuit (IC), often referred to as a chip or microprocessor. Used for products such as credit and debit cards, transport cards, SIM cards, Identifications cards etc., the embedded IC provides data storage, additional security and functionality.

Such applications put high requirements on the quality of smartcard devices, in particular on properties like safety, security, and interoperability. In particular, on smartcard devices where multiple applications can dynamically be incorporated on a single device, many forms of intended and unintended interaction between those applications may occur and impact the reliability of the smartcard device.

For ensuring the quality of smartcards and the reliability of the software deployed thereon, various testing approaches are nowadays used.

Software development life cycles use continuous integration (CI) and continuous deployment (CD) to reduce the time for code development and testing in a production line. Continuous integration is a process in which all development work is integrated as early as possible. The resulting artifacts are automatically created and tested. This process allows to identify errors in an early stage of the product development.

The applicant uses continuous integration testing systems that are employed for executing tests to ensure quality of embedded systems during the development process. In this regard, DODGE and TERO are tools for continuous integration.

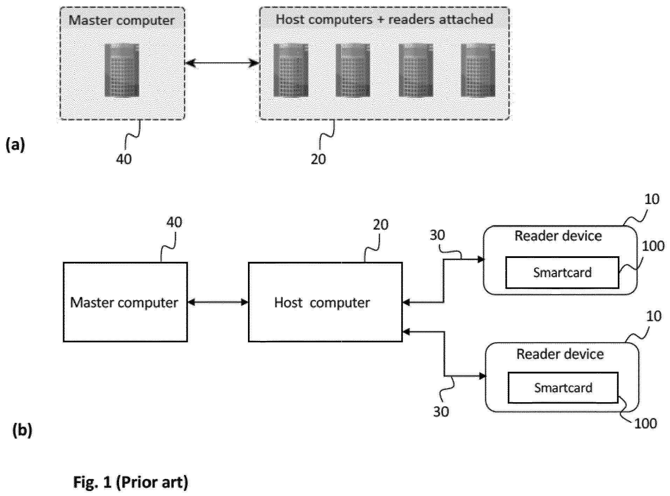

Such systems comprise a master computer 40 and a plurality of host computers 20, as depicted in Fig. 1(a) and Fig. 1(b). Each host computer 20 has several reader devices 10 connected thereto, wherein each reader device 10 has at least one smartcard 100, to be tested, connected thereto, e.g., inserted therein. Each reader device 10 is connected to one of the host computers 20 via a physical connection 30, such as through an USB port of the host computer. The master computer 40 has information on the availability of all the host computers 20 and its readers 10, and is able to manage and order test executions to each host computer 20. Once the test execution is finished the master computer 40 can report the test results to the user.

A continuous integration testing system for testing an embedded system is known from US 7,840,843 B2. The testing system includes one or more host computers and a plurality of devices physically connected with the host computers. Each device comprises an embedded system to be tested. The host computers are further connected with a control server, which controls the host computers to invoke a test program.

A drawback of the systems described above is that they are limited in their usability by the availability of the reader devices and the capacity of the host computers for connecting to available reader devices. A reader device is only available to the host computer that is physically connected to it. The number of reader devices is thus limited by the number of connection ports available at the host computer. Further, even if a set of reader devices would be available for test execution, but the connected host computer is busy or not connected with the master computer, the execution of tests on these reader devices would be blocked. Consequently, smartcards which can be targeted only through a particular host computer and a corresponding reader device cannot be tested. Further, with no available physical connections, a new host computer needs to be installed, even though the already installed host computers could work with more readers in terms of performance.

It is therefore desirable to provide a scalable testing framework for smartcards with improved availability and capacity for continuous integration testing.

### SUMMARY OF THE INVENTION

The present invention addresses the above object by the subject-matter covered by the independent claims. Preferred embodiments of the invention are defined in the dependent claims.

According to a first aspect of the present invention, there is provided a testing system for executing tests on a smartcard. The testing system comprises a plurality of host computers, a plurality of reader devices connectable to a plurality of smartcards, a network connecting the plurality of host computers with the plurality of reader devices, and a message broker configured to provide for the plurality of host computers a collision-free access to the plurality of reader devices. Each of the plurality of host computers is configured to access at least one reader device through the network for executing tests on a smartcard connected with the accessed reader device.

By connecting the host computers with the reader devices through a network, all readers are available all over the network, allowing any host computer in the network to execute a test on any available reader device in the network. By virtue of employing a message broker to provide a collision-free access to the reader devices, it is ensured that different test executions do not infer with each other. The reader devices' availability is increased as every host computer can be connected to any reader device via the network. The number of reader devices is thus not limited anymore by the available host computers nor by the available ports at the host computers, and new reader devices can be added to the pool of reader devices. A scalable continuous integrating testing system or environment for efficiently testing smartcards is thus provided. As the host computers need only one port to connect to the network, other ports are free and can be used for other purposes.

Preferably, a smartcard is connected with a reader device, by being directly inserted in the reader device, by using a bridge connector connected to an USB port of the reader device, or via a contactless connection as for instance an NFC function, or other existing connection means.

In some embodiments of the present invention, the message broker is configured to receive from a host computer of the plurality of host computers a request for identifying free reader devices, the request indicating requirements needed by the host computer for test execution.

The requirements may indicate a specific hardware required by the host computer for executing a test. This hardware might only be available on a particular reader device. The host computer is able to request and obtain from the network collision-free (that is, exclusive) access to such a reader device with a specific hardware thereon.

Preferably, the message broker is configured to identify a free reader device from the plurality of reader devices satisfying the requirements, and to transmit the identifier of the free reader device to the host computer.

This provide for an increased flexibility of the testing system, as the host computer is not restricted to test execution on fixed, pre-set reader devices, but can dynamically and on the fly request for a suitable reader device.

Preferably, the message broker is configured to allocate the selected reader device to the host computer and to set a status of the selected reader device to allocated.

By setting the status of the selected reader device to allocated, this reader device is blocked and hence not free anymore, and can thus not be selected by another host computer for test execution.

In some embodiments of the present invention, the host computer is configured to establish communication with the allocated reader device through the network, and execute the tests on the smartcard connected to the allocated reader device.

Preferably, the message broker sets the status of the allocated reader device to free upon receiving a notification from the host computer informing that the test is completed. The reader device is thus freed and can be selected for further tests.

In some embodiment of the present invention, the message broker is configured to implement a queue for collision-free access to the plurality of reader devices based on a current test load on each of the reader devices.

This provides an efficient way for managing the plurality of reader devices and implementing load balancing.

In some embodiment of the present invention, the testing system comprises a master computer connected to the plurality of host computers, the master computer being configured to control the plurality of host computers to execute tests on the smartcards according to one or more test parameters.

By using open source tools, such as Jenkins, the master computer is able to detect modifications in the codebase and launch the corresponding tests to the host computers with the desired readers and smartcards.

According to a second aspect of the present invention, there is provided a method for executing tests on a smartcard. The method is performed in a testing system comprising a plurality of host computers, a plurality of reader devices connectable to a plurality of smartcards, a network connecting the plurality of host computers with the plurality of reader devices, and a message broker. The method comprises, in a first step, receiving at the message broker from a host computer of the plurality of host computers a request for identifying free reader devices, the request indicating requirements needed by the host computer for test execution. In a further step, the message broker identifies a free reader device from the plurality of reader devices satisfying the requirements, and in a subsequent step transmits the identifier of the free reader device to the host computer. The host computer accesses through the network the reader device identified by the received identifier, and executes tests on a smartcard connected to the reader device.

In some embodiments of the present invention, the message broker sets a status of the selected reader device to allocated. This may be realized using a lookup table which stores the status of all reader devices available in the testing system. When new reader devices are added or an allocated reader device freed, the lookup table is updated accordingly. Further information, such as indicating the host computers the reader devices are allocated to, can be stored as well.

Preferably, the message broker sets the status of the allocated reader device to free upon receiving a notification from the host computer informing that the test is completed.

In some embodiments of the present invention, the network is a switch-based network, preferably comprising an Ethernet switch. In some embodiments of the present invention, the network comprises a cloud-based switch.

By using a network switch for connecting the host computers with the reader devices, a delocalization of the reader devices from the host computers is achieved. The reader devices and the host computers do not need to be located in close proximity to each other.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which:
FIG. 1(a) shows a schematic representation of a conventional continuous integration testing system;
FIG. 1(b) shows a block diagram of an implementation of the system in Fig. 1(a);
FIG. 2 shows a block diagram of a scalable system for testing smartcards according to an embodiment of the invention;
FIG. 3 shows a schematic representation of the interaction of the various components of the system in Fig. 2 for test execution according to an embodiment of the invention;
FIG. 4 shows a signal diagram of a method for test execution according to an embodiment of the invention.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

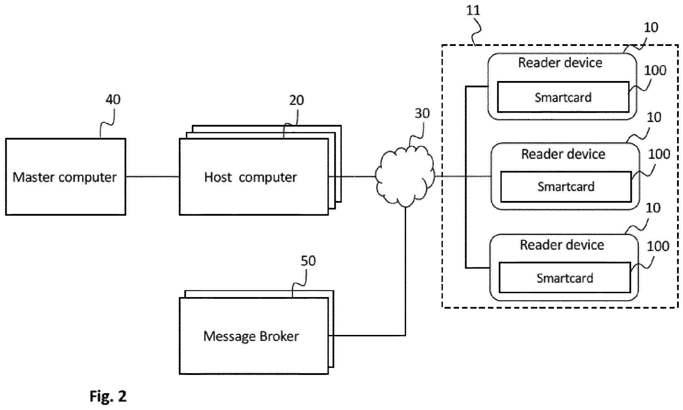

Fig. 2 shows a testing system for executing tests on a smart card according to an embodiment of the invention.

The testing system comprises a plurality of host computers 20, connected to a plurality of reader devices 10 through a network 30. In some embodiments of the present invention, the network is a switch-based network, preferably comprising an Ethernet switch. In a further embodiment, the switch-based network can also be implemented using a cloud-switch.

Each reader device 10 is connectable with a smartcard 100, for instance by directly inserting the smartcard in a slot of the reader device. Other connection means, for instance via a connector bridge or through NFC connection are also possible.

The reader devices 10 are available all over the network 30, forming a pool 11 of reader devices, such that any host computer 20 is able to connect with and execute a test on any reader device available.

To ensure a collision-free test execution, the testing system may comprise a further entity, the message broker 50. Particularly, the message broker 50 is able to handle network communications in a way to ensure that different test executions do not disturb each other. That is, the message broker 50 prevents a scenario in which two or more host computers would execute a test on the same reader device at the same time. The message broker 50 is connected to the network 30.

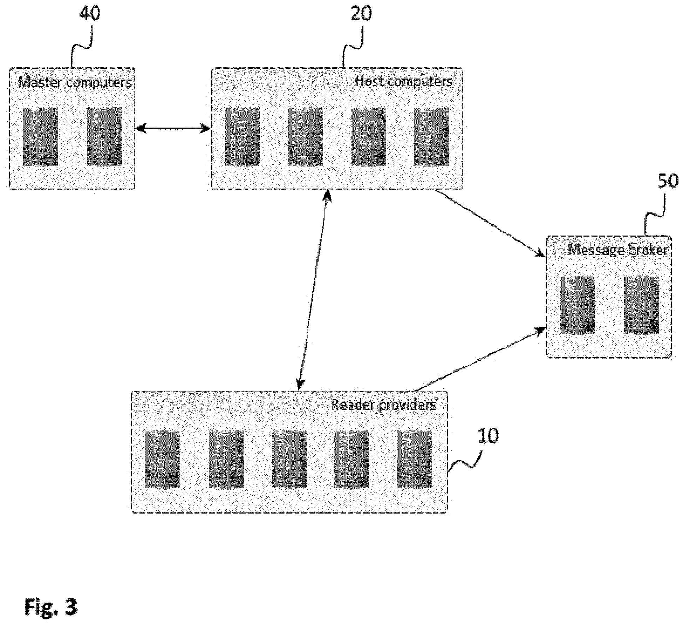

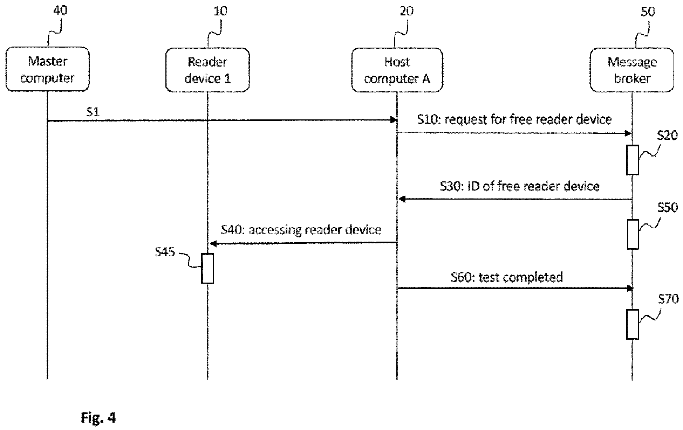

The functionality of the message broker 50 will be described in the following in connection with Fig. 3 and Fig. 4.

FIG. 3 shows a schematic representation of the interaction of the various components of the system in Fig. 2, for test execution according to an embodiment of the invention. A preferred embodiment illustrating the interaction through signaling between the components is illustrated in Fig. 4.

With reference to Fig. 3, the message broker 50 is able to monitor the network 30 and hence to collect information on the status of each host computer and each reader device. The message broker 50 may maintain a lookup table identifying all devices in the network and their current status such as free or allocated. A status set to free indicate a reader device not currently used for test execution by a host computer. A status set to allocated indicate that the respective device is being used for test execution by a host computer and hence not free to be selected by another host computer. This ensure a collision-free access to the reader devices for the host computer during test execution.

Other mechanisms for ensuring that different test executions do not disturb each other can be implemented at the message broker 50.

The message broker 50 may use queues or other means for implementing load balancing.

A preferred embodiment of a method for executing tests on a smartcard in the testing system described above is presented in the following with reference to Fig. 4.

The master computer 40 knows the availability of all the host computers within the testing system and selects in step S1 an available or idle host computer, here host computer A 20, for test execution. This test launching step by the master computer is a conventional step as usually performed in continuous integration testing systems.

In contrast to the conventional solutions, the host computer A is not physically connected to a set of reader devices, but is able to select a particular reader device from all the reader devices available within the network for executing the test thereon. For this, host computer HCA sends in step S10 a request to the message broker 50 to identify whether there is a free reader device available for test execution. The request may indicate specific requirements needed by the host computer 20 for test execution. These requirements may include specific HW or a particular smartcard needed for performing the test. The host computer may acquire knowledge of these requirements based on instructions received from the master computer 40 during the test launching step S1.

In step S20, the message broker 50 identifies a reader device from the pool of reader devices 11 available in the testing system, which is free and which fulfills the requirements, such as, for instance, reader device RD1 in Fig. 4.

In a subsequent step, S30, the message broker 50 transmits the identifier of the identified device, RD1, to the host computer HCA 20. The message broker 50 sets in step S50 the status of the selected reader device to allocated, to avoid a further selection of this reader device for another host computer while a test is being executed by host computer A on this reader device.

The host computer HCA 20 establishes communication with the particular reader device RD1 through the network 30 in step S40, and executes in step S45 the tests on the HW respectively the smartcard provided by the reader device RD1.

Upon completing the test, HCA 20 sends in step S60 a notification to the message broker 50, notifying that the reader device RD1 is not needed anymore. The message broker 50 frees this reader device in step S70, by changing its status from allocated to free. This reader device can now be assigned to any other host computer for further tests.

The aspects and embodiments described herein eliminate the need of physically connecting the host computer executing the test program and the smartcard reader with the desired HW to be tested. Thanks to this delocalization of the reader devices from the host computers, several advantages are achieved:
- The availability of reader devices is increased as every host computer can be connected to any reader device via the network.
- The number of reader devices is not limited anymore by the available host computers nor by the available ports at the host computers, and new reader devices can be added to the pool of reader devices.
- The host computers need only one port to connect to the network, other ports are free and can be used for other purposes.
- As host computers and reader devices are not physically 1-1 connected anymore they do not have to be located in close proximity to each other.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A testing system for executing tests on a smartcard, the testing system comprising:
- a plurality of host computers (20);
- a plurality of reader devices (10) connectable to a plurality of smartcards (100);
- a network (30) connecting the plurality of host computers (20) with the plurality of reader devices (10); and
- a message broker (50) configured to provide a collision-free access for the plurality of host computers (20) to the plurality of reader devices (10);
- wherein each of the plurality of host computers (20) is configured to access at least one reader device (10) through the network (30) for executing tests on a smartcard (100) connected with the accessed reader device (20).

2. The testing system according to claim 1, wherein the message broker (50) is configured to receive from a host computer (20) of the plurality of host computers (20) a request for identifying free reader devices, the request indicating requirements needed by the host computer (20) for test execution.

3. The testing system according to claim 2, wherein the message broker (50) is configured to identify at least one free reader device from the plurality of reader devices satisfying the requirements, and to transmit the identifier of the at least one free reader device to the host computer (20).

4. The testing system according to claim 3, wherein the message broker (50) is configured to allocate the selected reader device (10) to the host computer (20) and to set a status of the selected reader device (10) to allocated, thereby providing collision-free access for the host computer (20) to the selected reader device (10).

5. The testing system according to claim 4, wherein the host computer (20) is configured to establish communication with the allocated reader device (10) through the network (30), and execute the tests on the smartcard (100) connected to the allocated reader device (10).

6. The testing system according to claim 4 or 5, wherein the message broker (50) is configured to set the status of the allocated reader device (10) to free upon receiving a notification from the host computer (20) informing that the test is completed.

7. The testing system according to any one of claims 1 to 6, wherein the message broker (50) is configured to implement a queue for collision-free access to the plurality of reader devices (10) based on a current test load on each of the reader devices (10).

8. The testing system according to any one of claims 1 to 7, further comprising a master computer (40) connected to the plurality of host computers (20), the master computer (40) being configured to control the plurality of host computers (20) to execute tests on the smartcards according to one or more test parameters.

9. A method for executing tests on a smartcard performed by a testing system comprising a plurality of host computers (20), a plurality of reader devices (10) connectable to a plurality of smartcards (100), a network (30) connecting the plurality of host computers (20) with the plurality of reader devices (10), and a message broker (50), the method comprising,
at the message broker (50):
- receiving (S10) from a host computer (20) of the plurality of host computers (20) a request for identifying free reader devices, the request indicating requirements needed by the host computer (20) for test execution;
- identify (S20) a free reader device (10) from the plurality of reader devices satisfying the requirements; and
- transmitting (S30) the identifier of the free reader device (10) to the host computer (20);
at the host computer (20):
- accessing (S40) through the network (30) the reader device (10) identified by the received identifier; and
- executing (S45) tests on a smartcard (100) connected to the reader device (10).

10. The method according to claim 9, wherein the request indicates a hardware required by the host computer (20) to perform the test.

11. The method according to claim 9 or 10, further comprising at the message broker (50) allocating (S50) the selected reader device (10) to the host computer (20) and setting a status of the selected reader device (10) to allocated.

12. The method according to any one of claims 9 to 11, further comprising at the message broker (50) setting (S70) the status of the allocated reader device (10) to free upon receiving (S60) a notification from the host computer (20) informing that the test is completed.

13. The testing system according to any one of claims 1 to 8, or the method according to any of claims 9 to 12, wherein the network (30) is a switch-based network.

14. The testing system or the method according to claim 13, wherein the switch-based network comprises an Ethernet switch.

15. The testing system or the method according to claim 14, wherein the switch-based network comprises a cloud-based switch.
